# EUROPÄISCHE PATENTANMELDUNG

(11) **EP 4 797 519 A1**
(43) Veröffentlichungstag der Anmeldung: **26.08.2026**
(21) Anmeldenummer: 25159181.4
(22) Anmeldetag: 20.02.2025
(51) Int. Cl.: H02M 1/36, H02M 7/483

(54) **VERFAHREN UND VORRICHTUNG FÜR MULTILEVEL-UMRICHTER ZUR BEGRENZUNG EINER GLEICHSPANNUNG AM GLEICHSPANNUNGSKREIS MIT AKTIVIERUNG EINES SCHEMAS DER IMPULSSPERRE**

(71) Anmelder: Innomotics GmbH, 90441 Nürnberg (DE)
(72) Erfinder: Brunotte, Christoph, 91056 Erlangen (DE); Karwatzki, Dennis, 90513 Zirndorf (DE); Feeß, Johannes, 90425 Nürnberg (DE)
(74) Vertreter: Michalski Hüttermann & Partner mbB

(57) **Zusammenfassung**

Die Erfindung betrifft ein Verfahren (V) zur Begrenzung einer Gleichspannung (U_{DC}) am Gleichspannungskreis (1) eines Multilevel-Umrichters (2), wobei eine erste, zweite und dritte Halbbrücke (3a,3b,3c) von Halbbrücken (3) des Multilevel-Umrichters (2) am Gleichspannungskreis (1) - mit jeweils einem oberen Halbbrückenzweig (4) und einem unteren Halbbrückenzweig (5) pro Halbbrücke (3a,3b,3c) - eine Wechselspannung (U_{AC}) für Wechselspannungsphasen (L) des Multilevel-Umrichters (2) erzeugen, wobei in jedem der oberen und unteren Halbbrückenzweige (4,5) mindestens zwei in Reihe geschaltete Submodule (6) als erste Submodule (6a) der ersten Halbbrücke (3a), zweite Submodule (6b) der zweiten Halbbrücke (3b) und dritte Submodule (6c) der dritten Halbbrücke (3c) betrieben werden und wobei in jedem der Submodule (6) zwei in Reihe geschaltete Leistungshalbleiterschalter (7) mit einem parallel zu ihnen verschalteten Sudmodul-Kondensator (8) betrieben werden, dadurch gekennzeichnet, dass mit Einlegen einer Impulssperre (I) am Multilevel-Umrichter (2) die Leistungshalbleiterschalter (7) der ersten Submodule (6a) der ersten Halbbrücke (3a) an einer ersten Phase (L1) der Wechselspannungsphasen (L) und die Leistungshalbleiterschalter (7) der zweiten Submodule (6b) der zweiten Halbbrücke (3b) an einer zweiten Phase (L2) der Wechselspannungsphasen (L) mittels eines Impulssperrsignals (IS) gesperrt werden und die Leistungshalbleiterschalter (7) der dritten Submodule (6,6c) der dritten Halbbrücke (3c) für eine dritte Phase (L3) der Wechselspannungsphasen (L) mittels eines ersten Schaltsignals (S1) und/oder zweiten Schaltsignals (S2) geschaltet werden, wobei die Gleichspannung (U_{DC}) am Gleichspannungskreis (1) begrenzt wird. Ferner betrifft die Erfindung einen Multilevel-Umrichter (2) welcher ausgebildet ist, ein Verfahren (V) zur Begrenzung einer Gleichspannung (U_{DC}) am Gleichspannungskreis (1) des Multilevel-Umrichters (2) durchzuführen.

## Beschreibung

Multilevel-Umrichter sind speziell ausgebildete elektrische Umrichter, welche, ausgehend von einem elektrischen Versorgungsnetz, zumindest in einer speisenden Betriebsart Gleichspannung eines Gleichspannungskreises - auch Gleichspannungszwischenkreis genannt - in Wechselspannung zum Betrieb einer elektrischen Maschine oder eines weiteren elektrischen Netzes umwandeln, wobei mehrere Spannungsstufen erzeugbar sind.

Diese Umrichter bieten Vorteile gegenüber traditionellen zweistufigen elektrischen Umrichtern, insbesondere in Bezug auf die Reduktion von Oberschwingungen, höheren Spannungspegeln und einer höheren Effizienz.

Zur Verdeutlichung der zunehmenden Bedeutung von Multilevel-Umrichtern im industriellen Umfeld werden im Folgenden einige der Merkmale und Vorteile dieses Typs elektrischer Umrichter vorgestellt.

Multilevel-Umrichter können verschiedene Spannungsniveaus bereitstellen, indem sie mehrere Spannungsstufen erzeugen. Dies ermöglicht eine feingranulare Anpassung der Ausgangsspannung und führt zu einer glatteren sinusförmigen Ausgangsspannung im Vergleich zu herkömmlichen zweistufigen elektrischen Umrichtern.

Durch die Erzeugung einer nahezu sinusförmigen Ausgangsspannung verringern Multilevel-Umrichter Oberschwingungen und verbessern die Gesamtqualität der Spannungsversorgung. Dies ist besonders wichtig für empfindliche elektronische Geräte und Anwendungen mit hohen Leistungsanforderungen.

Multilevel-Umrichter können höhere Ausgangsspannungen erzeugen, was für Anwendungen der Hochspannungs-Gleichstromübertragung (HVDC) und für industrielle Antriebe - insbesondere höherer Leistung - vorteilhaft ist.

Dank der besseren Spannungsanpassung und der Reduktion von Oberschwingungen arbeiten Multilevel-Umrichter effizienter und mit einem geringeren Leistungsverlust als zweistufige elektrische Umrichter.

Multilevel-Umrichter bestehen oft aus modularen Einheiten, die einfach erweitert oder angepasst werden können, um die Anforderungen verschiedener Anwendungen zu erfüllen. Dies macht sie skalierbar und anpassungsfähig.

Es gibt mehrere Topologien von Multilevel-Umrichtern, darunter:
- einen kaskadierten H-Brücken-Umrichter (CHB), welche aus mehreren H-Brücken-Modulen bestehen, die in Reihe geschaltet sind, um die gewünschte Ausgangsspannung zu erzeugen,
- einen Diode-geklemmten Umrichter (Neutral Point Clamped, NPC), welche Dioden verwenden, um die verschiedenen Spannungsniveaus zu erzeugen und zu stabilisieren und
- einen Flying-Capacitor-Umrichter, welche Kondensatoren nutzen, die zwischen den verschiedenen Spannungsniveaus geschaltet werden, um die gewünschte Ausgangsspannung zu erzielen.

Aus dem Betrieb eines Multilevel-Umrichters heraus ergeben sich verschiedene Gründe, ihn in einen sicheren Zustand zu versetzten, bei dem ausgangsseitig keine Bestromung einer angeschlossenen Last oder eines angeschlossenen Netzes mehr möglich ist. Dies kann aus einem sogenannten Normalbetrieb heraus in einen prozessbedingten Stillstand mittels einer Impulssperre an den Leistungshalbleiterschaltern des erfolgen, insbesondere aus betriebsbedingten Situationen heraus, bei denen beispielsweise ein Notaus oder ein Schnellhalt erfolgt. Im Grunde muss sichergestellt sein, dass beispielsweise eine elektrische Maschine - so schnell wie möglich - keine mechanischen Bewegungen mehr ausführen kann.

Beim Übergang des Multilevel-Umrichters vom Normalbetrieb in die Impulssperre führen abbauende Ströme aufgrund vorhandener Induktivitäten (Zweigdrossel, Last, Einspeisung), insbesondere am Gleichspannungszwischenkreis, zu Spannungserhöhungen.

Bei Eintritt der Impulssperre ergibt sich - abhängig vom Vorzeichen der fließenden Zweigströme - eine vom Multilevel-Umrichter gleichspannungszwischenkreisseitig verursachte Spannung, welche maximal gleich der Summe der aktuellen Kondensatorspannungen von sämtlichen Submodulen des Multilevel-Umrichters in einer Brückenschaltung einer Wechselspannungsphase ist.

Diese hohe Spannung sorgt für einen schnellen Abbau des Gleichspannungszwischenkreisstromes. Je nach Anzahl der in Reihe geschalteten Submodule sowie deren aktuellen Kondensatorspannungen ergibt sich am Gleichspannungszwischenkreis ein Spannungsniveau, welches mehr als dem Doppelten der Gleichspannungszwischenkreisspannung im Normalbetrieb entsprechen kann.

Ebenso kann es bei einem mit einem Transformator und einem Diodengleichrichter gespeisten Multilevel-Umrichter während der Impulssperre beim Öffnen eines netzseitigen Leistungsschalters zu Spannungserhöhungen am Gleichspannungszwischenkreis kommen. Durch das Öffnen des Leistungsschalters führt der im Transformator verbliebene Magnetisierungsstrom kurzzeitig zu einem Zwischenkreisstrom am Gleichspannungszwischenkreis, wobei sich ein Spannungsniveau einstelt, das auch in diesem Fall mehr als dem Doppelten der Gleichspannungszwischenkreisspannung im Normalbetrieb entspricht.

Alle im Multilevel-Umrichter verbauten elektrischen Bauelemente und die in diesem Zusammenhang wirksamen Luftstrecken innerhalb des Multilevel-Umrichters müssen für die beim Übergang in die Impulssperre auftretenden Spannungen insbesondere am Gleichspannungszwischenkreis dimensioniert werden. Bei einem Betrieb des Multilevel-Umrichters mit einem Diodengleichrichter gilt dies insbesondere für die maximale Sperrspannung der Dioden in den Submodulen des Multilevel-Umrichters.

Die Auslegung des Multilevel-Umrichters erfolgt damit für eine Gleichspannungszwischenkreisspannung die mehr als der doppelten Gleichspannungszwischenkreisspannung für den Normalbetrieb entspricht. Alternativ dazu kann ein zentraler Gleichspannungszwischenkeiskondensator verwendet werden oder ein Überspannungsschutz für die Gleichrichterdioden zum Einsatz kommen.

Der Erfindung liegt die Aufgabe zugrunde, ein Verfahren für einen Impulssperrbetrieb und eine Vorrichtung eines Multilevel-Umrichters zur Durchführung des Verfahrens bereitzustellen, welche die Begrenzung einer Gleichspannung am Gleichspannungskreis gegenüber dem Stand der Technik mit Einlegen einer Impulssperre am Multilevel-Umrichter verbessert.

Die Aufgabe wird durch ein Verfahren mit den in Anspruch 1 angegebenen Merkmalen und eine Vorrichtung zur Durchführung des Verfahrens mit den in Anspruch 7 angegebenen Merkmalen gelöst.

Für die Lösung der Aufgabe wird ein Verfahren zur Begrenzung einer Gleichspannung am Gleichspannungskreis eines Multilevel-Umrichters vorgeschlagen, wobei eine erste, zweite und dritte Halbbrücke von Halbbrücken des Multilevel-Umrichters am Gleichspannungskreis - mit jeweils einem oberen Halbbrückenzweig und einem unteren Halbbrückenzweig pro Halbbrücke - eine Wechselspannung für Wechselspannungsphasen des Multilevel-Umrichters erzeugen, wobei in jedem der oberen und unteren Halbbrückenzweige mindestens zwei in Reihe geschaltete Submodule als erste Submodule der ersten Halbbrücke, zweite Submodule der zweiten Halbbrücke und dritte Submodule der dritten Halbbrücke betrieben werden und wobei in jedem der Submodule zwei in Reihe geschaltete Leistungshalbleiterschalter mit einem parallel zu ihnen verschalteten Sudmodul-Kondensator betrieben werden, dadurch gekennzeichnet, dass mit Einlegen einer Impulssperre am Multilevel-Umrichter die Leistungshalbleiterschalter der ersten Submodule der ersten Halbbrücke an einer ersten Phase der Wechselspannungsphasen und die Leistungshalbleiterschalter der zweiten Submodule der zweiten Halbbrücke an einer zweiten Phase der Wechselspannungsphasen mittels eines Impulssperrsignals gesperrt werden und die Leistungshalbleiterschalter der dritten Submodule der dritten Halbbrücke für eine dritte Phase der Wechselspannungsphasen mittels eines ersten Schaltsignals und/oder zweiten Schaltsignals geschaltet werden, wobei die Gleichspannung am Gleichspannungskreis begrenzt wird.

Die zugrunde liegende Idee ist, nicht alle der Leistungshalbleiterschalter der Submodule der Halbbrücken unmittelbar nach Einlegen der Impulssperre mit dem Impulssperrsignal zu belegen.

Im Allgemeinen werden die oberen und die unteren Halbbrückenzweige mit dem Impulssperrsignal belegt. Typischerweise gehören die weiterschaltenden Leistungshalbleiterschalter der entsprechenden Submodule zu einer Phase der Wechselspannungsphasen einer am Multilevel-Umrichter angeschlossenen Last/ elektrischen Motor oder angeschlossenem elektrischem Netz. Die Submodul-Kondensatoren der Submodule der Halbrückenzweige bleiben mit dem Gleichspannungskreis (dem Gleichspannungszwischenkreis) verbunden und begrenzen die mögliche maximale Spannungserhöhung der Gleichspannung am Gleichspannungskreis.

Die Submodule-Kondensatoren in den weiterschaltenden Leistungshalbleiterschalter der entsprechenden Submodule wirken dabei wie ein zentraler Gleichspannungskreiskondensator, der die Gleichspannung am Gleichspannungskreis auf einem einstellbaren Wert hält.

Die weiterschaltenden Leistungshalbleiterschalter der entsprechenden Submodule der entsprechenden Halbbrücke stellen dabei am Gleichspannungskreis gerade so eine Spannung ein, die zu einem Abbau des Zwischenkreisstroms am Beginn der Impulssperre führt.

Bei einer ersten vorteilhaften Ausgestaltungsform des Verfahrens werden mittels des ersten Schaltsignals und/oder zweiten Schaltsignals die Leistungshalbleiterschalter der dritten Submodule der dritten Halbbrücke die Gleichspannung am Gleichspannungskreis geschaltet, dass ein Gleichstrom im Gleichspannungskreis nach Einlegen der Impulssperre abgebaut wird.

Bei einer weiteren vorteilhaften Ausgestaltungsform des Verfahrens werden mittels des ersten Schaltsignals die Leistungshalbleiterschalter der dritten Submodule der dritten Halbbrücke derart geschaltet, dass eine Submodul-Ausgangsspannung aller oder zumindest einiger der dritten Submodule gleich einer Submodulspannung am Submodul-Kondensator des jeweiligen dritten Submodule ist oder werden mittels des zweiten Schaltsignals die Leistungshalbleiterschalter der dritten Submodule der dritten Halbbrücke derart geschaltet werden, dass eine Submodul-Ausgangsspannung aller oder zumindest einiger der dritten Submodule Null ist.

Bei einer weiteren vorteilhaften Ausgestaltungsform des Verfahrens erzeugt mit Einlegen der Impulssperre die an der ersten Phase, der zweiten Phase und der dritten Phase der Wechselspannungsphasen des Multilevel-Umrichters durch die eine Last oder ein elektrisches Netz verursachende Wechselspannung einen Stromfluss eines Wechselstromes zu den Submodulen des Multilevel-Umrichters und werden mittels des ersten Schaltsignals und/oder zweiten Schaltsignals die Leistungshalbleiterschalter der dritten Submodule der dritten Halbbrücke derart geschaltet, die Wechselspannung an den Wechselspannungsphasen so einzustellen, dass der Stromfluss des Wechselstromes ausgehend von der Last oder dem elektrisches Netz unterdrückt wird.

Bei einer weiteren vorteilhaften Ausgestaltungsform des Verfahrens erfolgt eine Auswahl der durch das Impulssperrsignals zu sperrenden ersten Submodule der ersten Halbbrücke und der zweiten Submodule der zweiten Halbbrücke derart, dass die Halbbrücken mit den kleinsten Strömen von in den oberen Halbbrückenzweigen und unteren Halbbrückenzweigen fließenden Zweigströmen ausgewählt werden.

Bei einer weiteren vorteilhaften Ausgestaltungsform des Verfahrens werden die Leistungshalbleiterschalter der dritten Submodule der dritten Halbbrücke mit einem Impulssperrsignal dann belegt, wenn eine unzulässig hohe Gleichspannung am Gleichspannungskreis nach Einlegen der Impulssperre abgeklungen oder ausgeschlossen ist.

Für die Lösung der Aufgabe wird weiterhin Multilevel-Umrichter vorgeschlagen, welcher ausgebildet ist, ein Verfahren zur Begrenzung einer Gleichspannung am Gleichspannungskreis durchzuführen, wobei mittels einer ersten, zweiten und dritten Halbbrücke von Halbbrücken (3) des Multilevel-Umrichters am Gleichspannungskreis - mit jeweils einem oberen Halbbrückenzweig und einem unteren Halbbrückenzweig pro Halbbrücke - eine Wechselspannung für Wechselspannungsphasen des Multilevel-Umrichters erzeugbar ist, wobei in jedem der oberen und unteren Halbbrückenzweige mindestens zwei in Reihe geschaltete Submodule als erste Submodule der ersten Halbbrücke, zweite Submodule der zweiten Halbbrücke und dritte Submodule der dritten Halbbrücke betreibbar sind und wobei in jedem der Submodule zwei in Reihe geschaltete Leistungshalbleiterschalter mit einem parallel zu ihnen verschalteten Sudmodul-Kondensator betreibbar sind, dadurch gekennzeichnet dass mit Einlegen einer Impulssperre am Multilevel-Umrichter die Leistungshalbleiterschalter der ersten Submodule der ersten Halbbrücke an einer ersten Phase der Wechselspannungsphasen und die Leistungshalbleiterschalter der zweiten Submodule der zweiten Halbbrücke an einer zweiten Phase der Wechselspannungsphasen mittels eines Impulssperrsignals sperrbar sind und die Leistungshalbleiterschalter der dritten Submodule der dritten Halbbrücke für eine dritte Phase der Wechselspannungsphasen mittels eines ersten Schaltsignals und/oder zweiten Schaltsignals schaltbar sind, wobei die Gleichspannung am Gleichspannungskreis begrenzbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: ein schematisches Schaltbild, welches das erfindungsgemäße Verfahren im Zusammenhang mit einem Multilevel-Umrichter mit Submodulen in den Brückenzweigen zeigt, welcher zur Durchführung des Verfahrens ausgebildet ist und,
- FIG 2: ein weiteres schematisches Schaltbild, welches ein Submodul des Multilevel-Umrichters gemäß FIG 1 zeigt.

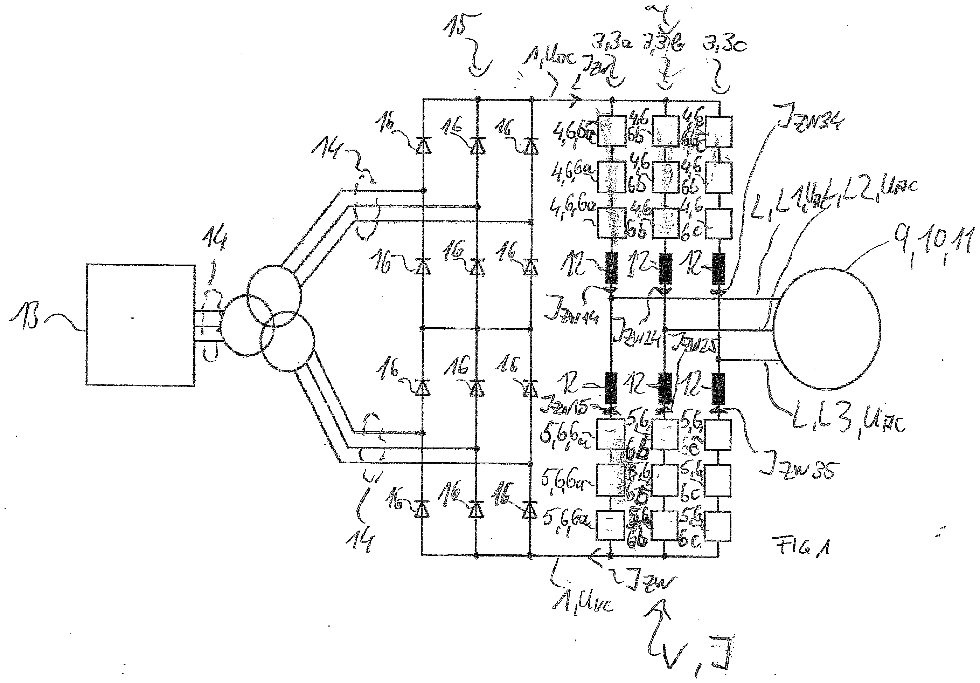

Die FIG 1 zeigt ein schematisches Schaltbild, welches das erfindungsgemäße Verfahren V im Zusammenhang mit einem Multilevel-Umrichter 2 mit Submodulen 6 in den Brückenzweigen 3 zeigt, welcher zur Durchführung des Verfahrens V ausgebildet ist.

Der Multilevel-Umrichter 2 ist an einem Gleichspannungskreis 1 mit einer Gleichspannung U_{DC} angeschlossen. Der Gleichspannungskreis 2 auch Gleichspannungszwischenkreis genannt, wird über einen Diodengleichrichter 15, welcher mit Gleichrichterdioden 16 versehen ist, mittels eines Versorgungsnetzes 13 über ein Wechselspannungsnetz 14 mit elektrischer Energie versorgt.

Der Multilevel-Umrichter 2 weist Halbbrücken 3 auf, eine erste Halbbrücke 3a, eine zweite Halbbrücke 3b und eine dritte Halbbrücke 3c, wobei alle Halbrücken 3,3a,3b,3c mit einem oberen Halbbrückenzweig 4 und einem unteren Halbbrückenzweig 5 ausgebildet sind.

Ebenfalls weisen die Halbbrücken 3 jeweils in Reihenschaltung angeordnete Submodule 6 als erste Submodule 6a für die erste Halbbrücke 3a, zweite Submodule 6b für die zweite Halbbrücke 3b und dritte Submodule 6c für die dritte Halbbrücke 3c auf.

In den jeweiligen oberen Halbbrückenzweigen 4 und unteren Halbbrückenzweigen 5 sind Induktivitäten 12 verortet, welche für Induktivitäten 12 im Einsatz des Multilevel-Umrichters 2 schematisch stehen, wie Zweigdrosseln, der Last 9 - insbesondere eines elektrischen Motors 11 - 11, das elektrische Netz 10 sowie Zuleitungen zur Last 9 / dem elektrischen Motor 11 / dem elektrischen Netz 10 mit den Wechselspannungsphasen L, als erste Phase L1, zweite Phase L2 und dritte Phase L3, welche die Wechselspannung U_{AC} aufweisen, aber auch des Versorgungsnetzes 13 mit dessen Wechselspannungsnetz 14.

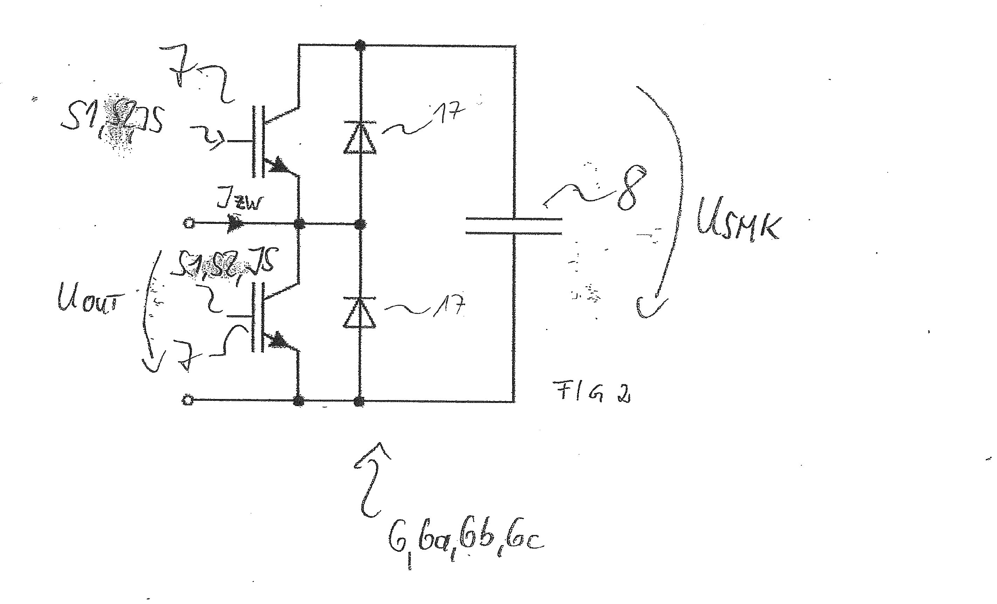

Das Verfahren V zur Begrenzung der Gleichspannung U_{DC} am Gleichspannungskreis 1 des Multilevel-Umrichters 2 im Falle des Einlegens einer Impulssperre I für den Multilevel-Umrichter 2 sieht nun vor, nicht alle der Submodule 6 der Halbbrücken 3 mit ihren Leistungshalbleiterschaltern (siehe FIG 2) sofort mit einem Impulssperrsignal (siehe FIG 2) zu belegen, sondern - zum Abbau bzw. der Verhinderung eines ungewollten Anstiegs der Gleichspannung U_{DC} am Gleichspannungskreis 1 zunächst nur die Leistungshalbleiterschalter der ersten Submodule 6a der ersten Halbbrücke 3a sowie die Leistungshalbleiterschalter der ersten Submodule 6a der ersten Halbbrücke 3a entsprechend zu sperren.

Die Auswahl der sofort mit dem Impulssperrsignal der entsprechenden Leistungshalbleiterschalter zu belegen, richtet sich nach den kleinsten der Zweigströme I_{ZW14},I_{ZW15},I_{ZW24,}I_{ZW25},I_{ZW34},I_{ZW35} des in den oberen Halbbrückenzweigen 4 und unteren Halbbrückenzweigen 5 der Halbbrücken 3. Dazu wird auch betrachtet, ob die Flussrichtung der Zweigströme I_{ZW14},I_{ZW15},I_{ZW24},I_{ZW25},I_{ZW34},I_{ZW35} in einer positiven Flussrichtung, wie bei den Zweigströme I_{ZW14},I_{ZW24},I_{ZW34} der oberen Halbbrückenzweige 4 erfolgt oder in einer negativen Flussrichtung der Zweigströme I_{ZW14},I_{ZW24},I_{ZW34} der unteren Halbbrückenzweige 5.

Die negative Flussrichtung ist dabei von Vorteil, da eine positive Flussrichtung der Zweigströme I_{ZW14},I_{ZW15},I_{ZW24},I_{ZW25},I_{ZW34},I_{ZW35} beim Abkommutieren seines mit dem Impulssperrsignal in Impulssperre I versetzten oberen Halbbrückenzweiges 4 oder unteren Halbbrückenzweiges 5 eine hohe Gegenspannung hervorrufen würde.

Ist eine Erhöhung der Gleichspannung U_{DC} am Gleichspannungskreis 1 abgeklungen oder ist sichergestellt, dass sie nicht mehr während der Impulssperre I auftreten kann, werden auch die Leistungshalbleiterschalter die dritten Submodule 6c der dritten Halbbrücke 3 mit einem Impulssperrsignal belegt, so dass der Multilevel-Umrichter 2 in einen Betriebszustand der vollständigen Impulssperre übergegangen ist.

FIG 2 zeigt ein weiteres schematisches Schaltbild mit einem Submodul 6,6a,6b,6c des Multilevel-Umrichters 2gemäß FIG 1.

Das Submodul 6,6a,6b,6c ist mit zwei in Reihe geschalteten Leistungshalbleiterschaltern 7 ausgebildet, parallel zu jedem der Leistungshalbleiterschalter 7 ist eine sogenannte Freilaufdiode 17 angeordnet und parallel zu beiden in Reihe geschalteten Leistungshalbleiterschaltern 7 ist ein Submodul-Kondensator 8 verschaltet.

Anschließbar ist das Submodul 6,6a,6b,6c über den Mittelabgriff der in Reihe geschalteten Leistungshalbleiterschalter 7 sowie über zumindest einen der verbleibenden Leistungsanschlüsse des Leistungshalbleiterschalters 7 in den Halbbrücken des Multilevel-umrichters 2 anschließbar, wobei darüber die Submodul-Ausgangsspannung Uₒᵤₜ abfällt.

Über dem Submodul-Kondensator 8 fällt die Kondensator-Submodulspannung U_{SMK} ab.

Wird das Submodul 6,6a,6b,6c während der Impulssperre gesperrt, liegt das Impulssperrsignal IS an den Leistungshalbleiterschaltern 7 an. Wird das Submodul 6,6a,6b,6c zumindest für einen begrenzten Zeitraum des Vorliegens einer erhöhten Gleichspannung am Gleichspannungskreis während der Impulssperre mit den Leistungshalbleiterschaltern 7 weiterhin geschaltet, liegen das erste oder das zweite Schaltsignal S1,S2 an den Leistungshalbleiterschaltern 7 an.

## Patentansprüche

1. Verfahren (V) zur Begrenzung einer Gleichspannung (U_{DC}) am Gleichspannungskreis (1) eines Multilevel-Umrichters (2), wobei
- eine erste, zweite und dritte Halbbrücke (3a,3b,3c) von Halbbrücken (3) des Multilevel-Umrichters (2) am Gleichspannungskreis (1) - mit jeweils einem oberen Halbbrückenzweig (4) und einem unteren Halbbrückenzweig (5) pro Halbbrücke (3a,3b,3c) - eine Wechselspannung (U_{AC}) für Wechselspannungsphasen (L) des Multilevel-Umrichters (2) erzeugen,
- in jedem der oberen und unteren Halbbrückenzweige (4,5) mindestens zwei in Reihe geschaltete Submodule (6) als erste Submodule (6a) der ersten Halbbrücke (3a), zweite Submodule (6b) der zweiten Halbbrücke (3b) und dritte Submodule (6c) der dritten Halbbrücke (3c) betrieben werden und
- in jedem der Submodule (6) zwei in Reihe geschaltete Leistungshalbleiterschalter (7) mit einem parallel zu ihnen verschalteten Sudmodul-Kondensator (8) betrieben werden,
**dadurch gekennzeichnet, dass** mit Einlegen einer Impulssperre (I) am Multilevel-Umrichter (2)
- die Leistungshalbleiterschalter (7) der ersten Submodule (6a) der ersten Halbbrücke (3a) an einer ersten Phase (L1) der Wechselspannungsphasen (L) und die Leistungshalbleiterschalter (7) der zweiten Submodule (6b) der zweiten Halbbrücke (3b) an einer zweiten Phase (L2) der Wechselspannungsphasen (L) mittels eines Impulssperrsignals (IS) gesperrt werden und
- die Leistungshalbleiterschalter (7) der dritten Submodule (6,6c) der dritten Halbbrücke (3c) für eine dritte Phase (L3) der Wechselspannungsphasen (L) mittels eines ersten Schaltsignals (S1) und/oder zweiten Schaltsignals (S2) geschaltet werden, wobei die Gleichspannung (U_{DC}) am Gleichspannungskreis (1) begrenzt wird.

2. Verfahren (V) nach Anspruch 1, wobei mittels des ersten Schaltsignals (S1) und/oder zweiten Schaltsignals (S2) die Leistungshalbleiterschalter (7) der dritten Submodule (6,6c) der dritten Halbbrücke (3c) die Gleichspannung (U_{DC}) am Gleichspannungskreis (1) geschaltet werden, dass ein Gleichstrom (I_{DC}) im Gleichspannungskreis (1) nach Einlegen der Impulssperre (I) abgebaut wird.

3. Verfahren (V) nach Anspruch 2, wobei mittels des ersten Schaltsignals (S1) die Leistungshalbleiterschalter (7) der dritten Submodule (6,6c) der dritten Halbbrücke (3c) derart geschaltet werden, dass eine Submodul-Ausgangsspannung (Uₒᵤₜ) aller oder zumindest einiger der dritten Submodule (6,6c) gleich einer Submodulspannung (U_{SM}) am Submodul-Kondensator (8) des jeweiligen dritten Submodule (6,6c) ist oder mittels des zweiten Schaltsignals (S2) die Leistungshalbleiterschalter (7) der dritten Submodule (6,6c) der dritten Halbbrücke (3c) derart geschaltet werden, dass eine Submodul-Ausgangsspannung (Uₒᵤₜ) aller oder zumindest einiger der dritten Submodule (6,6c) Null ist.

4. Verfahren (V) nach einem der vorhergehenden Ansprüche, wobei mit Einlegen der Impulssperre die an der ersten Phase (L1), der zweiten Phase (L2) und der dritten Phase (L3) der Wechselspannungsphasen (L) des Multilevel-Umrichters (2) durch die eine Last (9) oder ein elektrisches Netz (10) verursachende Wechselspannung (U_{AC})einen Stromfluss eines Wechselstromes (I_{AC}) zu den Submodulen (6) des Multilevel-Umrichters (2) erzeugt, wobei mittels des ersten Schaltsignals (S1) und/oder zweiten Schaltsignals (S2) die Leistungshalbleiterschalter (7) der dritten Submodule (6,6c) der dritten Halbbrücke (3c) derart geschaltet werden, die Wechselspannung (U_{AC})an den Wechselspannungsphasen (L) so einzustellen, dass der Stromfluss des Wechselstromes (I_{AC}) ausgehend von der Last (9) oder dem elektrisches Netz (10) unterdrückt wird.

5. Verfahren (V) nach einem der vorhergehenden Ansprüche, wobei eine Auswahl der durch das Impulssperrsignals (IS) zu sperrenden ersten Submodule (6a) der ersten Halbbrücke (3a) und der zweiten Submodule (6b) der zweiten Halbbrücke (3b) derart erfolgt, dass die Halbbrücken mit den kleinsten Strömen von in den oberen Halbbrückenzweigen (4) und unteren Halbbrückenzweigen (5) fließenden Zweigströmen (I_{ZW14},I_{ZW15},I_{WZ24},I_{ZW25},I_{ZW34},I_{ZW35},) ausgewählt werden.

6. Verfahren (V) nach einem der vorhergehenden Ansprüche, wobei die Leistungshalbleiterschalter (7) der dritten Submodule (6,6c) der dritten Halbbrücke (3c) mit einem Impulssperrsignal (IS) dann belegt werden, wenn eine unzulässig hohe Gleichspannung (U_{DC}) am Gleichspannungskreis (1) nach Einlegen der Impulssperre (I) abgeklungen oder ausgeschlossen ist.

7. Multilevel-Umrichter (2), welcher ausgebildet ist, ein Verfahren (V) zur Begrenzung einer Gleichspannung (U_{DC}) am Gleichspannungskreis (1) nach einem der Ansprüche 1 bis 6 durchzuführen, wobei
- mittels einer ersten, zweiten und dritten Halbbrücke (3a,3b,3c) von Halbbrücken (3) des Multilevel-Umrichters (2) am Gleichspannungskreis (1) - mit jeweils einem oberen Halbbrückenzweig (4) und einem unteren Halbbrückenzweig (4) pro Halbbrücke (3a,3b,3c) - eine Wechselspannung (U_{AC}) für Wechselspannungsphasen (L) des Multilevel-Umrichters (2) erzeugbar ist,
- in jedem der oberen und unteren Halbbrückenzweige (4,5) mindestens zwei in Reihe geschaltete Submodule (6) als erste Submodule (6a) der ersten Halbbrücke (3a), zweite Submodule (6b) der zweiten Halbbrücke (3b) und dritte Submodule (6c) der dritten Halbbrücke (3c) betreibbar sind,
- in jedem der Submodule (6) zwei in Reihe geschaltete Leistungshalbleiterschalter (7) mit einem parallel zu ihnen verschalteten Sudmodul-Kondensator (8) betreibbar sind,
**dadurch gekennzeichnet, dass** mit Einlegen einer Impulssperre (I) am Multilevel-Umrichter (2)
- die Leistungshalbleiterschalter (7) der ersten Submodule (6a) der ersten Halbbrücke (3a) an einer ersten Phase (L1) der Wechselspannungsphasen (L) und die Leistungshalbleiterschalter (7) der zweiten Submodule (6b) der zweiten Halbbrücke (3b) an einer zweiten Phase (L2) der Wechselspannungsphasen (L) mittels eines Impulssperrsignals (IS) sperrbar sind und
- die Leistungshalbleiterschalter (7) der dritten Submodule (6,6c) der dritten Halbbrücke (3c) für eine dritte Phase (L3) der Wechselspannungsphasen (L) mittels eines ersten Schaltsignals (S1) und/oder zweiten Schaltsignals (S2) derart schaltbar sind, dass die Gleichspannung (U_{DC}) am Gleichspannungskreis (1) begrenzbar ist.
